# EUROPÄISCHE PATENTSCHRIFT

(11) **EP 4 092 225 B1**
(45) Veröffentlichungstag und Bekanntmachung des Hinweises auf die Patenterteilung: **26.02.2025**
(21) Anmeldenummer: 22157047.6
(22) Anmeldetag: 16.02.2022
(51) Int. Cl.: E04H 15/20, B63H 8/10

(54) **DREIDIMENSIONALE, THERMOPLASTISCH GEFORMTE, AUFBLASBARE STÜTZSTRUKTUREN UND VERFAHREN ZU DEREN HERSTELLUNG**
THREE-DIMENSIONAL, THERMOPLASTICALLY MOULDED INFLATABLE SUPPORT STRUCTURES AND METHOD OF MAKING SAME
STRUCTURES D'APPUI GONFLABLES MOULÉES DE MANIÈRE THERMOPLASTIQUE, TRIDIMENSIONNELLES ET LEUR PROCÉDÉ DE FABRICATION

(30) Priorität: 28.04.2021 DE 102021002234
(43) Veröffentlichungstag der Anmeldung: 23.11.2022
(73) Patentinhaber: Kaiser, Isabelle, 83098 Brannenburg (DE)
(72) Erfinder: Kaiser, Isabelle, 83098 Brannenburg (DE)
(74) Vertreter: Weidner Stern Jeschke

(56) Entgegenhaltungen:
- DE-T2- 69 910 625
- US-A1- 2021 047 020

## Beschreibung

Die Erfindung bezieht sich auf dreidimensionale, thermoplastisch geformte aufblasbare Stützstrukturen, beispielsweise für Surfkites, Wingfoils und pneumatische Zelte sowie ein Verfahren zur Herstellung dieser Stützstrukturen.

Dreidimensionale, pneumatisch aufblasbare Stützstrukturen finden in diversen Produkten Anwendung. Speziell im Bereich der aufblasbaren Zelte, Surfkites oder Wingfoils bilden sie deren tragende Elemente, um strukturelle Integrität und Stabilität zu ermöglichen. Diese Stutzstrukturen sind in der Regel aus Segmenten zusammengesetzt, um einen in alle Achsen gebogenen Röhrenkörper zu generieren. Diese Einzelsegmente bestehen üblicherweise aus einem gewobenen Polyestermaterial (Dacron), welche durch Vernähen miteinander verbunden werden und somit einen Verbund eingehen. Im Inneren dieser Röhren ist regelmäßig eine Blase angeordnet, bestehend aus einem luftdichten Schlauch, der sich durch das Aufblasen an die Hülle anlegt und durch einen erhöhten Innendruck der jeweiligen Konstruktion Stabilität verleiht.

So beschreibt die EP 0647751 ein Verfahren zur Herstellung solcher Stützstrukturen folgender Art
"... An das Ventil 28 ist eine Vakuumquelle 52 angeschlossen, um den Druck innerhalb der Blase 20 zu reduzieren. Als Ergebnis kollabiert die Blase 20 über den Pellets 50, um einen festen, gekrümmten Dorn zu bilden. Unmittelbar vor dem Ablegen der Fäden um den Dorn wird die Außenfläche 54 der Blase vorzugsweise mit einer wässrigen Lösung eines Harzes aus einem Harzreservoir 56 besprüht ...
... Nachdem die Pellets 50 entfernt wurden, können die Luftbalken 12 zu einem kleinen Paket zusammengerollt und zum Ort des Schutzes 10 transportiert werden. Am Standort wird die Blase 20 durch eines der Ventile 26, 28 durch die Luftzufuhr 74 aufgeblasen. (Abbildung 8). Sobald der Luftbalken 12 aufgeblasen ist, ist er bereit, für die Herstellung des Shelters 10 verwendet zu werden. Während der Luftbalken 12 aufgeblasen wird, nimmt er die Form des Gewebes 42 an. ..."

Bauartbedingt weist diese Konstruktionsprinzip folgende Nachteile, speziell im Bereich dreidimensionale, aufblasbare Stützstrukturen, beispielsweise für Surfkites, Wingfoils und pneumatische Zelte, auf.

Stand der Technik sind Stützstrukturen, die über eine Mehrzahl an Einzelelemente über Nähte miteinander verbunden werden. Jede Naht muss vor dem Vernähen verstärkt werden, da durch die Naht das Polyestergewebe perforiert wird und somit eine Sollbruchstelle entsteht. Der limitierende Faktor an einer genähten Stützstruktur ist der zu beaufschlagende Innendruck, welcher durch das Aufblasen der Blase erfolgt. Anstrebenswert ist ein möglichst hoher Innendruck, da dieser die Struktursteifigkeit maßgeblich beeinflusst.

Mehrfach genähte Strukturen neigen jedoch dazu, unter hohem Druck das Material immer weiter zu schwächen, da durch die Nähnadel entstandenen Löcher im Material sogenannte Langlöcher entstehen welche ab einem gewissen Druck/Zug zwangsläufig zu einem Materialversagen führen.

Ein weiterer Nachteil ist das Gesamtgewicht der Stützstruktur von Außenhülle und Innenschlauch. Dadurch das die Außenhülle durch Vernähen nicht luftdicht ist, muss zwangsläufig ein luftdichter Innenschlauch verwendet werden. Somit addieren sich das Gewicht, was ein großer Produktnachteil ist. Auch addieren sich die Kosten für die Herstellung der Hülle mit den Kosten des Schlauches.

Die US 2021/047020 A1 stellt den nächstliegenden Stand der Technik dar und offenbart dreidimensionale, thermoplastisch geformte, aufblasbare röhrenförmige Stützstrukturen ("leading edge tube" 20 und "strut" 22), die eine symmetrische und gleichfalls konische Formung mit reduzierten Rohrdurchmessern an den Enden aufweisen, jedoch mangelhafte Stützstrukturen realisieren.

Die DE 699 10 625 T2 offenbart einen generellen Schichtaufbau, allerdings betrifft dieser nur ein Segeltuch und nicht die Stützstruktur.

Auch bekannt sind technische Lösungen, welche ohne Naht hergestellt werden. Dabei wird regelmäßig das Material mittels Druckes gegen eine außenliegende Form gepresst und dann in dieser Lage thermisch geformt.

Hierbei ist nachteilig, dass dabei regelmäßig Faltungen im Gewebe erzeugt werden, welche nachträglich nicht mehr zu beheben oder bearbeitbar sind.

Aufgabe der Erfindung ist es, die bekannten Nachteile des Standes der Technik zu beheben und somit einen Vorschlag zu unterbreiten, mit welchem Kosten der Fertigung minimiert werden und eine leichte Bauart der Stützstruktur ermöglicht wird sowie die Stützstrukturen zu verbessern.

Gelöst wird diese Aufgabe durch die thermoplastische Verformung eines Kernmaterials 2 unter Verwendung einer mit Unterdruck beaufschlagten (Vakuum) beheizten Positivform 3 gemäß den Patentansprüchen.

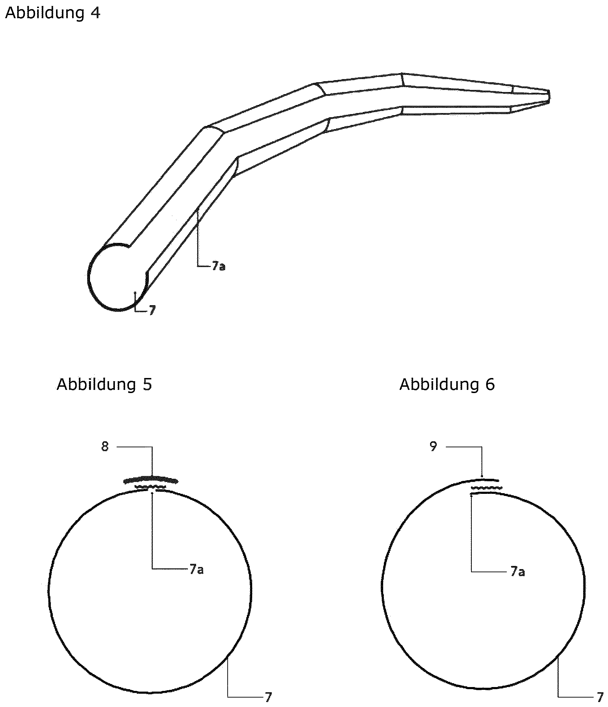

Nachfolgend soll die erfindungsgemäße Lösung anhand eines Ausführungsbeispiels und der Abbildungen 1 bis 6 näher erläutert werden.

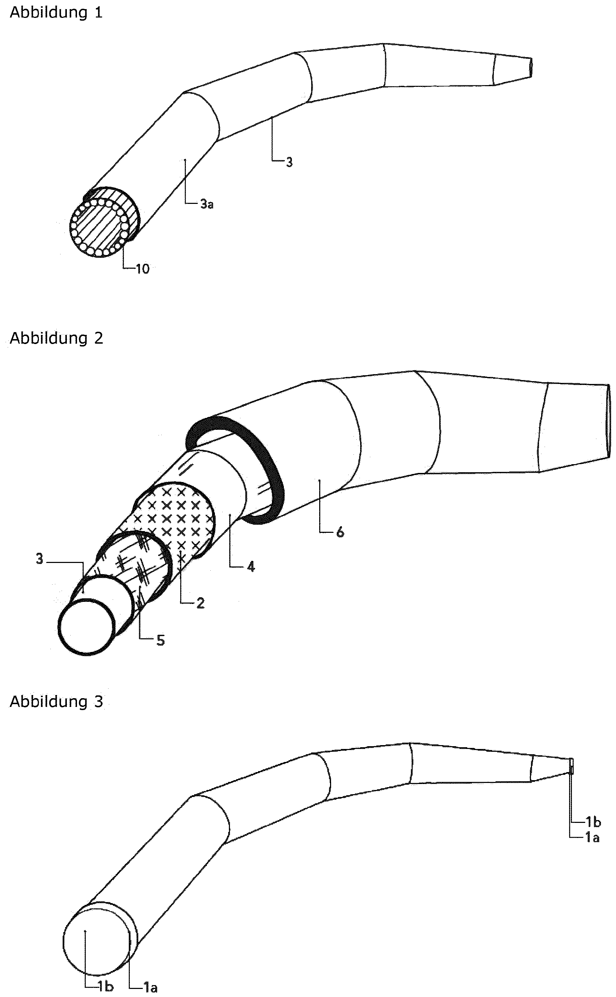

Dabei zeigt Abbildung 1 die Positivform 3 mit um ihren gesamten Umfang verteilten Löchern 3a sowie den im Inneren der Positivform 3 angeordneten Heizelementen 10.

Abbildung 2 zeigt einen beispielhaften Aufbau bei der Herstellung einer dreidimensionalen, aufblasbaren Stützstruktur mit dem von Innen nach Außen gebildeten Aufbau zur Erzeugung eines Laminats
Positivform 3
perforierte thermoplastische Folie 5
Kernmaterial 2
luftdichte Folie 4
optionale Thermoisolierung 6

Abbildung 3 zeigt die Stützstruktur 1 mit durch Endkappen 1b verschlossenen offenen Enden 1a.

Abbildung 4 zeigt eine durch Aufschneiden der Stützstruktur 1 gebildete Halbschale 7 mit den Halbschalenkanten 7a.

In Abbildung 5 wird eine solche Halbschale 7 gezeigt, wie sie unter Anwendung eines Rückenbandes 8 verschlossen ist, Abbildung 6 zeigt eine Halbschale 7, welche mittels einer Überlappnaht 9 verschlossen ist.

Die Erfindung verwendet eine röhrenförmige Stützstruktur 1 welche mit thermoplastischen verformbaren Materialien mittels einer beheizbaren und bedarfsweise dreidimensional gekrümmten Positivform 3 thermoplastisch verformt und dauerhaft in ihrer Form fixiert werden kann.

Diese dreidimensionale Stützstruktur 1 kann je nach verwendetem Materialmix entweder leichter als eine herkömmliche Stützstruktur ausgelegt werden oder struktursteifer im Sinne einer erhöhten Belastbarkeit.

Durch Wegfall oder Reduktion von Sollbruchstellen kann ein deutlich erhöhter Innendruck realisiert werden, was die Struktursteifigkeit erhöht und somit die Produkteigenschaften signifikant verbessert.

Ein erhöhter Innendruck ermöglicht andererseits die Reduzierung des Durchmessers. Dies wiederum hat positiven Einfluss auf Gewicht und Preis, da weniger Material verarbeitet werden muss, um dieselbe statische Belastbarkeit zu erreichen.

Die Positivform 3 weist auf ihrem gesamten Umfang eine Vielzahl kleiner Löcher 3a auf, durch die ein Unterdruck auf der Oberseite der Positivform 3 mithilfe beispielsweise einer Vakuumpumpe generiert werden kann.

Dabei kann die Positivform 3 stufenlos mit Heizelementen 10 aufgeheizt werden, um den Schmelzpunkt von unterschiedlichen thermoplastischen Materialien zu erreichen. Um ein perfektes Anlegen des Kernmaterials 2 an der Außenwand der Positivform 3 zu gewährleisten, wird eine luftdichte Folie 4 von außen das Kernmaterial 2 umschließend abgedichtet aufgelegt und dann in der Positivform 3 Unterdruck erzeugt.

Um den Schmelzpunkt der Materialien besser kontrollieren zu können, kann eine temporäre Thermoisolierung 6 von außen angebracht werden.

Im Falle einer symmetrischen und gleichfalls konischen Auslegung der Stützstruktur 1 mit reduzierten Rohrdurchmessern an den Enden, kann das bereits thermoplastisch verformte Stützstruktur 1 durch Aufschneiden unterteilt werden.

Die dabei entstehende Halbschale 7 kann wiederum mit einem thermoplastischen Rückenband 8 dauerhaft und luftdicht verschlossen werden. Auch ist ein luftdichtes Schließen der Halbschalenkanten 7a durch eine Überlappnaht 9 möglich.

Die fertige Halbschale 7 ermöglicht durch Aufklappen den einfachen Zugang auf ihre Innenseite, was das Anbringen von zusätzlichen Elementen an der Innenseite oder Außenseite ermöglicht.

So kann zum Beispiel eine weitere Stützstruktur in diversen Winkeln an die vorhandene Struktur von außen beispielsweise angenäht und von Innen mit einer luftdichten Folie/ Kleber versiegelt werden.

Die Halbschalenkante 7a kann dabei vorzugsweise so ausgelegt werden, dass sie den Gesamtverbund nicht schwächt. Dies kann durch ein zusätzliches Rückenband 8 oder eine Überlappnaht 9 oder durch eine Kombination aus Rückenband 8 und Überlappnaht 9 gewährleistet werden.

In besonderer Ausführung der erfindungsgemäßen Lösung können durch das Hinzufügen von zusätzlichen Verstärkungsmaterialien um das Kernmaterial 2 herum definierte Bereiche der Stützstruktur an spezielle technische Bedürfnisse angepasst oder optimiert werden.

So ist es als dem Erfindungsgedanken zugehörig zu betrachten, dass das Kernmaterial 2 als Flechtschlauch ausgelegt sein kann. Dieses kann durch Strecken oder Stauchen in seinen technischen Eigenschaften verändert werden, um die Bedürfnisse des Produktes zu optimieren.

Ebenfalls ist es als dem Erfindungsgedanken zugehörig zu betrachten, dass das Kernmaterial 2 auch aus nicht thermoplastisch verformbaren Fasern oder Garnen ausgelegt ist.

Eine solche Ausgestaltung der erfindungsgemäßen Lösung ermöglicht durch die Auswahl der Fasern oder Garnen eine direkte Einflussnahme auf die Eigenschaften der erfindungsgemäßen Stützstrukturen 1. Ebenfalls besteht eine Einflussnahme auf die Eigenschaften der Stützstrukturen 1 durch die Art der Wicklung mit den nicht thermoplastisch verformbaren Fasern oder Garnen.

## Patentansprüche

1. Dreidimensionale, thermoplastisch geformte, aufblasbare röhrenförmige Stützstrukturen (1), welche jeweils aus einem Sandwich-Aufbau von innen nach außen aus perforierter thermoplastischer Folie (5), Kernmaterial (2), luftdichter Folie (4) gebildet sind, wobei die Stützstrukturen eine symmetrische und gleichfalls konische Formung der Stützstrukturen (1) mit reduzierten Rohrdurchmessern an den Enden aufweisen und nach erfolgter thermoplastischer Verformung der Stützstrukturen (1) durch Aufschneiden unterteilt worden sind.

2. Stützstrukturen (1) nach Anspruch 1, **dadurch gekennzeichnet, dass** deren durch Aufschneiden gebildete Halbschalen (7) mit einem thermoplastischen Rückenband (8) dauerhaft und luftdicht verschließbar sind.

3. Stützstrukturen (1) nach Anspruch 1, **dadurch gekennzeichnet, dass** deren durch Aufschneiden gebildete Halbschalen (7) durch eine Überlappnaht (9) dauerhaft und luftdicht verschließbar sind.

4. Stützstrukturen (1) nach Anspruch 1, **dadurch gekennzeichnet, dass** deren durch Aufschneiden gebildete Halbschalen (7) durch Aufklappen den einfachen Zugang auf ihre Innenseiten realisieren.

5. Stützstrukturen (1) nach Anspruch 1, **dadurch gekennzeichnet, dass** an deren durch Aufschneiden gebildete Halbschalen (7) durch Aufklappen das Anbringen von zusätzlichen Elementen an der Innenseite oder Außenseite möglich ist.

6. Stützstrukturen (1) nach Anspruch 5, **dadurch gekennzeichnet, dass** zusätzlich anzubringende Elemente weitere Stützstrukturen (1) sind.

7. Stützstrukturen (1) nach Anspruch 2, **dadurch gekennzeichnet, dass** deren durch Aufschneiden entstehende Halbschalenkanten (7a) so ausgelegt sind, dass sie den Gesamtverbund durch Verwendung eines zusätzlichen Rückenbandes (8) oder einer Überlappnaht (9) oder durch eine Kombination aus Rückenband (8) und Überlappnaht (9) zusätzlich stabilisiert.

8. Verfahren zur Herstellung von dreidimensionalen, thermoplastisch geformten, aufblasbaren röhrenförmigen Stützstrukturen (1) nach Anspruch 1, **dadurch gekennzeichnet, dass** sie hergestellt sind mittels einer beheizbaren und bedarfsweise dreidimensional gekrümmten Positivform (3), um welche ein Sandwich-Aufbau von innen nach außen aus perforierter thermoplastischer Folie (5), Kernmaterial (2) und luftdichter Folie (4) gelegt wird, wobei die Positivform (3), welche auf Ihrem gesamten Umfang eine Vielzahl kleiner Löcher (3a) aufweist, mit einem auf der Oberseite der Positivform (3) wirkenden Unterdruck beaufschlagt wird, welcher die äußere, das Kernmaterial (2) umschließend abdichtende luftdichte Folie (4) so ansaugt, dass ein perfektes Anlegen des Kernmaterials (2) an der Außenwand der Positivform (3) realisiert wird und die Positivform (3) mittels Heizelementen (10) so aufgeheizt wird, dass der Schmelzpunkt der unterschiedlichen thermoplastischen Materialien des Sandwich-Aufbaus erreicht wird.

9. Verfahren zur Herstellung von dreidimensionalen, thermoplastisch geformten, aufblasbaren röhrenförmigen Stützstrukturen (1) nach Anspruch 8, **dadurch gekennzeichnet, dass** beim Aufheizen mit Heizelementen (10) zur Kontrolle des Schmelzpunktes der unterschiedlichen thermoplastischen Materialien des Sandwich-Aufbaus eine temporäre Thermoisolierung (6) von außen verwendet wird.

10. Verfahren zur Herstellung von Stützstrukturen (1) nach Anspruch 9, **dadurch gekennzeichnet, dass** deren offene Enden (1a) im Nachgang zur thermoplastischen Verformung durch Erhitzen und Aufschmelzen der Oberfläche von Endkappen (1b) luftdicht zu verschließen sind.

11. Verwendung von dreidimensionalen, thermoplastisch geformten, aufblasbaren röhrenförmigen Stützstrukturen (1) nach Anspruch 1 für Surfkites, Wingfoils und pneumatische Zelte.

## Claims

1. Three-dimensional, thermoplastically moulded, inflatable tubular support structures (1), which are each formed from a sandwich structure of perforated thermoplastic film (5), core material (2) and airtight film (4) from the inside to the outside, wherein the support structures have a symmetrical and likewise conical shape of the support structures (1) with reduced tube diameters at the ends, and have been subdivided by cutting after thermoplastic moulding of the support structures (1).

2. Support structures (1) according to claim 1, **characterised in that** their half-shells (7) formed by cutting open can be closed permanently and in an airtight manner with a thermoplastic backing strip (8).

3. Support structures (1) according to claim 1, **characterised in that** their half-shells (7) formed by cutting open can be closed permanently and in an airtight manner by an overlap seam (9).

4. Support structures (1) according to claim 1, **characterised in that** their half-shells (7) formed by cutting open allow easy access to their insides by folding them open.

5. Support structures (1) according to claim 1, **characterised in that** additional elements can be attached to the inside or outside of the half-shells (7) formed by cutting them open.

6. Support structures (1) according to claim 5, **characterised in that** additional elements to be attached are further support structures (1).

7. Support structures (1) according to claim 2, **characterised in that** their half-shell edges (7a), which are formed by cutting open, are designed in such a way that they additionally stabilise the overall composite by using an additional backing strip (8) or an overlap seam (9) or by a combination of backing strip (8) and overlap seam (9).

8. Method for producing three-dimensional, thermoplastically moulded, inflatable tubular support structures (1) according to claim 1, **characterised in that** they are produced by means of a heatable and, if required, three-dimensionally curved positive mould (3), around which a sandwich structure consisting of perforated thermoplastic film (5), core material (2) and airtight film (4) is placed from the inside to the outside, wherein the positive mould (3), which has a large number of small holes (3a) around its entire circumference, is subjected to a negative pressure acting on the top of the positive mould (3), which sucks in the outer airtight film (4) sealing the core material (2) in such a way that perfect contact of the core material (2) with the outer wall of the positive mould (3) is achieved, and the positive mould (3) is heated by means of heating elements (10) such that the melting point of the different thermoplastic materials of the sandwich structure is reached.

9. Method for producing three-dimensional, thermoplastically moulded, inflatable tubular support structures (1) according to claim 8, **characterised in that** during heating with heating elements (10) a temporary thermal insulation (6) is used from the outside to control the melting point of the different thermoplastic materials of the sandwich structure.

10. Method for producing support structures (1) according to claim 9, **characterised in that** their open ends (1a) are to be sealed in an airtight manner by heating and melting the surface of end caps (1b) after thermoplastic moulding.

11. Use of three-dimensional, thermoplastically moulded, inflatable tubular support structures (1) according to claim 1 for surf kites, wingfoils and inflatable tents.

## Revendications

1. Structures de support (1) tridimensionnelles tubulaires gonflables, façonnées thermoplastiquement, qui sont chacune formées d'une construction en sandwich, de l'intérieur vers l'extérieur, d'un film thermoplastique perforé (5), d'un matériau de noyau (2), d'un film étanche à l'air (4), les structures de support présentant un façonnage symétrique et également conique des structures de support (1) avec des diamètres de tube réduits aux extrémités, et ayant été subdivisées par découpage après avoir réalisé la déformation thermoplastique des structures de support (1).

2. Structures de support (1) selon la revendication 1, **caractérisées en ce que** leurs demi-coques (7) formées par découpage peuvent être fermées de manière permanente et étanche à l'air par une bande dorsale thermoplastique (8).

3. Structures de support (1) selon la revendication 1, **caractérisées en ce que** leurs demi-coques (7) formées par découpage peuvent être fermées de manière permanente et étanche à l'air par une couture de chevauchement (9).

4. Structures de support (1) selon la revendication 1, **caractérisées en ce que** leurs demi-coques (7) formées par découpage réalisent un accès facile à leurs côtés intérieurs par rabattement.

5. Structures de support (1) selon la revendication 1, **caractérisées en ce que** leurs demi-coques (7) formées par découpage permettent, par rabattement, l'installation d'éléments supplémentaires sur le côté intérieur ou le côté extérieur.

6. Structures de support (1) selon la revendication 5, **caractérisées en ce que** les éléments à installer en plus sont d'autres structures de support (1).

7. Structures de support (1) selon la revendication 2, **caractérisées en ce que** leurs bords de demi-coque (7a) obtenus par découpage sont conçus de telle sorte qu'ils stabilisent en outre l'ensemble par l'utilisation d'une bande dorsale supplémentaire (8) ou d'une couture de chevauchement (9) ou par une combinaison de bande dorsale (8) et de couture de chevauchement (9).

8. Procédé de fabrication de structures de support tridimensionnelles tubulaires gonflables, façonnées thermoplastiquement (1) selon la revendication 1, **caractérisé en ce qu'**elles sont fabriquées au moyen d'un moule positif (3) pouvant être chauffé et, si nécessaire, courbé dans les trois dimensions, autour duquel est placée une construction en sandwich, de l'intérieur vers l'extérieur, d'un film thermoplastique perforé (5), d'un matériau de noyau (2) et d'un film étanche à l'air (4), le moule positif (3), qui présente sur toute sa circonférence une pluralité de petits trous (3a), étant soumis à une sous-pression agissant sur le côté supérieur du moule positif (3), qui aspire le film extérieur étanche à l'air (4) entourant de manière étanche le matériau du noyau (2) de telle sorte qu'une application parfaite du matériau du noyau (2) sur la paroi extérieure du moule positif (3) est réalisée et le moule positif (3) est chauffé au moyen d'éléments chauffants (10) de telle sorte que le point de fusion des différents matériaux thermoplastiques de la construction en sandwich est atteint.

9. Procédé de fabrication de structures de support tridimensionnelles tubulaires gonflables, façonnées thermoplastiquement (1) selon la revendication 8, **caractérisé en ce qu'**une isolation thermique temporaire (6) est utilisée de l'extérieur lors du chauffage avec des éléments chauffants (10) pour contrôler le point de fusion des différents matériaux thermoplastiques de la construction en sandwich.

10. Procédé de fabrication de structures de support (1) selon la revendication 9, **caractérisé en ce que** leurs extrémités ouvertes (1a) doivent être fermées de manière étanche à l'air après la déformation thermoplastique par chauffage et fusion de la surface de capuchons d'extrémité (1b).

11. Utilisation de structures de support tridimensionnelles tubulaires gonflables, façonnées thermoplastiquement (1) selon la revendication 1 pour des kitesurfs, des wingfoils et des tentes pneumatiques.
